# EUROPEAN PATENT SPECIFICATION

(11) **EP 4 162 649 B1**
(45) Date of publication and mention of the grant of the patent: **13.03.2024**
(21) Application number: 20732667.9
(22) Date of filing: 05.06.2020
(51) Int. Cl.: H04L 41/0813, H04L 41/0853, H04L 41/0859

(54) **STABLE REFERENCES FOR NETWORK FUNCTION LIFE CYCLE MANAGEMENT AUTOMATION**
STABILE REFERENZEN FÜR NETZWERKFUNKTIONSLEBENSZYKLUSVERWALTUNGSAUTOMATISIERUNG
RÉFÉRENCES STABLES POUR AUTOMATISATION DE GESTION DE CYCLE DE VIE DE FONCTION RÉSEAU

(43) Date of publication of application: 12.04.2023
(73) Proprietor: Telefonaktiebolaget LM Ericsson (publ), 164 83 Stockholm (SE)
(72) Inventor: M, Abdulla, Malappuram 676523 (IN); FIEDLER, Dietmar, 02400 Kirkkonummi (FI); HALDIN, Joakim, 04130 Sibbo (FI); K M, Vasantha Krishna, Bangalore 560004 (IN); VISEGRADI, Adam, 2220 Vecsés (HU)
(74) Representative: Ericsson
(86) International application number: PCT/IB2020/055328
(87) International publication number: WO 2021/245447

(56) References cited:
- US-A1- 2019 296 976
- ALVARENGA IGOR D ET AL: "Securing configuration management and migration of virtual network functions using blockchain", NOMS 2018 - 2018 IEEE/IFIP NETWORK OPERATIONS AND MANAGEMENT SYMPOSIUM, IEEE, 23 April 2018 (2018-04-23), pages 1-9, XP033371694, DOI: 10.1109/NOMS.2018.8406249 [retrieved on 2018-07-06]

## Description

### TECHNICAL FIELD

The present disclosure relates generally to management of network function virtualization in a communication network and, more particularly, to automation of network function management.

### BACKGROUND

Network Function Virtualization (NFV) is a virtualization technology for communication networks that eschews proprietary hardware and implements network functions (NFs) in the communication network as software running on industry-standard servers supported by high volume storage. A virtual network function (VNF) or containerized network function (CNF) implemented as a software component can be deployed at essentially any location within a cloud infrastructure without the need of installing new equipment. NFV enables rapid deployment of new services, ease of scalability, and reduced redundancy in the NFs.

NFV can be used in conjunction with software-defined network (SDNs) to automate deployment and life cycle management of VNFs/CNFs. When new VNF/CNF instances are deployed, the new VNF/CNF instance needs to be configured according to the specifications of the network operator. To enable self-configuration of VNFs/CNFs following deployment, either the configuration or a reference to the configuration is injected into a VM or container for the VNF/CNF when the VNF/CNF is being created. The reference can comprise, for example, a uniform resource locator (URL) that the VNF/CNF can use to download the configuration from external data storage. Known techniques for injecting a configuration into a VNF/CNF include the use of deployment temples, configuration drives and Helm charts. Once deployed, the VNF/CNF may be upgraded from time to time during the life cycle of the VNF/CNF. For this purpose, the VNF/CNF may have a North-bound interface (NBI) that enables the network operator to change the configuration of a running VNF/CNF.

While complete end-to-end automation throughout the life cycle of the VNF/CNF is a goal, certain aspects of VNF/CNF management have proven difficult to fully achieve without some human intervention. In a cloud-based system, hardware and software may fail, or may need to be upgraded resulting in service disruption. Following a service disruption, the VNF/CNF needs to be restored from backup or re-deployed when the VM for a VNF or a container for a CNF is restored to an active state. In cloud-based systems, mechanisms for rapid restoration and re-deployment become increasingly important because the VNF/CNF is running on one or two layers of cloud infrastructure that can fail or need to be upgraded
resulting in more frequent restoration or deployment of the VNF/CNF during the life cycle of the VNF/CNF. After restoration or re-deployment of the VNF/CNF, the VNF/CNF will need to be configured. If the configuration of the VNF/CNF has been updated, the network operator will typically want to use the most recent configuration. If the VNF/CNF is re-deployed using the same deployment templates/Helm charts used in the original deployment, any changes to the configuration made subsequent to the original deployment will be lost. While the network operator could change the deployment templates/Helm charts when the configuration of the VNF/CNF is changed, updating the deployment templates/Helm charts breaks the end-to-end automation. If the network operator has advance notice of the service disruption, the network operator could backup up the configuration to external storage and use the saved configuration to restore the VNF/CNF to the most recent configuration. This approach requires the network operator to intervene to make the backup and/or to change deployment temples/Helm charts to include a reference to the backup thus breaking the end-to-end automation.

US 2019/0296976 A1 discloses techniques for hierarchical coherency for network function virtualization. Applying a virtual network function (VNF) chain includes storing, in a shared data repository, configuration data used to configure VNFs of the VNF chain within a network node. Hierarchical version control of the configuration data allows VNF's, which are logically arranged in a sequential fashion, yet have the ability to process frames in parallel, to track which frames are governed by a hierarchy that may be manipulated based on external events such as fail-overs, or configuration changes.

### SUMMARY

The present disclosure provides a mechanism for deploying and redeploying VNFs and CNFs in a cloud-based communication network that enables automated configuration of VNFs/CNFs throughout the life cycle of the VNF/CNF. Elements of the solution comprise:
- Persistent external storage for VNF/CNF configurations;
- Version control implemented with tags and metadata to enable identification of different versions of a configuration for a VNF/CNF; and
- Use of a stable reference to the VNF/CNF configuration enabling a deployed or re-deployed VNF/CNF to download the most recent configuration for the VNF/CNF following deployment or re-deployment

The external data storage stores immutable copies of NF configurations for a VNF/CNF. When a VNF/CNF is created, a deployment template and/or chart is injected into the VNF/CNF instance to enable self-configuration. The deployment template or chart includes a stable reference to a NF configuration stored in the external data storage. The same stable reference is used throughout the life cycle of the VNF/CNF to deploy and re-deploy the VNF/CNF. The VNF/CNF uses the stable reference to download the NF configuration from the external data storage and configure the VNF/CNF. When the configuration of the VNF/CNF is updated after its initial deployment, a new version of the NF configuration is created and stored in the external data storage without overwriting the previous version or versions. This new version of the NF configuration is associated with the same stable reference as the previous versions of the NF configuration. Metadata associated with the different versions of a NF configuration indicates which of two or more different versions is the current version. The collection of different versions of a NF configuration associated with the same stable reference provide a complete history of the NF configuration, thus allowing rollback to any previous version of the NF configuration by simply modifying the metadata to mark that version as the current version. If a VNF/CNF needs to be re-deployed, the same stable reference used during the initial deployment is used to download the most recent version of the NF configuration based on the metadata. Therefore, there is no need for the network operator to modify the deployment template or chart that is injected into the VNF/CNF when it is re-deployed.

A first aspect of the disclosure comprises methods implemented by an interface controller of storing a configuration for a NF in a communication network. The method comprises connecting to a data storage configured to store two or more instances of a configuration for the NF. The two or more
instances include a base instance and one or more updated instances derived from the base instance. The method further comprises associating each of the two or more instances with a common configuration reference to create a configuration group for the NF. The method further comprises, for each instance in the configuration group, associating version control data with such instance that uniquely identifies a version of the configuration represented by such instance. The method further comprises receiving, from the NF, a download request message requesting the current configuration for the NF, the download request message including the common configuration reference. The method further comprises retrieving, from the data storage, an instance representing the current configuration for the NF selected from the configuration group based on the version control data, and sending, to the NF, the instance representing the current configuration for the NF.

A second aspect of the disclosure comprises methods implemented by a NF in a communication network. The method comprises receiving, from a data storage, a common configuration reference associated with a configuration group including two or more instances of a configuration for the NF stored in the data storage. The two or more instances including a base instance and one or more updated instances derived from the base instance. Each instance in the configuration group is associated with version control data that uniquely identifies a version of the configuration represented by such instance. The method further comprises sending, to an interface controller for the data storage, a download request message requesting a current configuration for the NF, the download request message including the configuration reference, and receiving, from the interface controller, an instance of the configuration representing a current configuration for the NF.

A third aspect of the disclosure comprises an interface controller configured to store a configuration for a NF in a communication network. The interface controller is configured to connect to a data storage configured to store two or more instances of a configuration for the NF. The two or more instances include a base instance and one or more updated instances
derived from the base instance. The interface controller is further configured to associate each of the two or more instances with a common configuration reference to create a configuration group for the NF. The interface controller is further configured to, for each instance in the configuration group, associate version control data with such instance that uniquely identifies a version of the configuration represented by such instance. The interface controller is further configured to receive a download request message requesting the current configuration for the NF. The download request message includes the common configuration reference. The interface controller is further configured to retrieve, from the data storage, an instance representing the current configuration for the NF selected from the configuration group based on the version control data. The interface controller is further configured to send, to the NF, the instance representing the current configuration for the NF.

A fourth aspect of the disclosure comprises a NF in a communication network. The NF is configured to receive, from a data storage, a common configuration reference associated with a configuration group including two or more instances of a configuration for the NF stored in the data storage. The two or more instances including a base instance and one or more updated instances derived from the base instance. Each instance in the configuration group is associated with version control data that uniquely identifies a version of the configuration represented by such instance. The NF is further configured to send, to an interface controller for the data storage, a download request message requesting a current configuration for the NF, the download request message including the common configuration reference, and receive, from the interface controller, an instance of the configuration representing a current configuration for the NF.

A fifth aspect of the disclosure comprises a computer program comprising executable instructions that, when executed by processing circuitry in the interface controller, causes the interface controller to perform the method according to the first aspect, or that, when executed by processing circuitry in a NF, causes the NF to perform the method according to the second aspect.

A sixth aspect of the disclosure comprises a carrier containing a computer program according to the fifth aspect. The carrier is one of an electronic signal, optical signal, radio signal, or a non-transitory computer readable storage medium.

### BRIEF DESCRIPTION OF THE DRAWINGS

Figure 1 illustrates a communication network 10 that implements a cloud computing model.
Figure 2 illustrates persistent, version-controlled storage as herein described.
Figure 3A illustrates the initial deployment of the VNF/CNF.
Figure 3B illustrates configuration change for a deployed VNF/CNF.
Figure 3C illustrates re-deployment of the VNF/CNF.
Figure 4 illustrates an exemplary method implemented by an interface controller of storing a configuration for a NF in a communication network.
Figure 5 illustrates an exemplary method implemented by a NF in a communication network.
Figure 6 illustrates an interface controller configured to operate as herein described.
Figure 7 illustrates a NF configured to operate as herein described.
Figure 8 illustrates a network device 500 that can be configured as an interface controller or NF.

### DETAILED DESCRIPTION

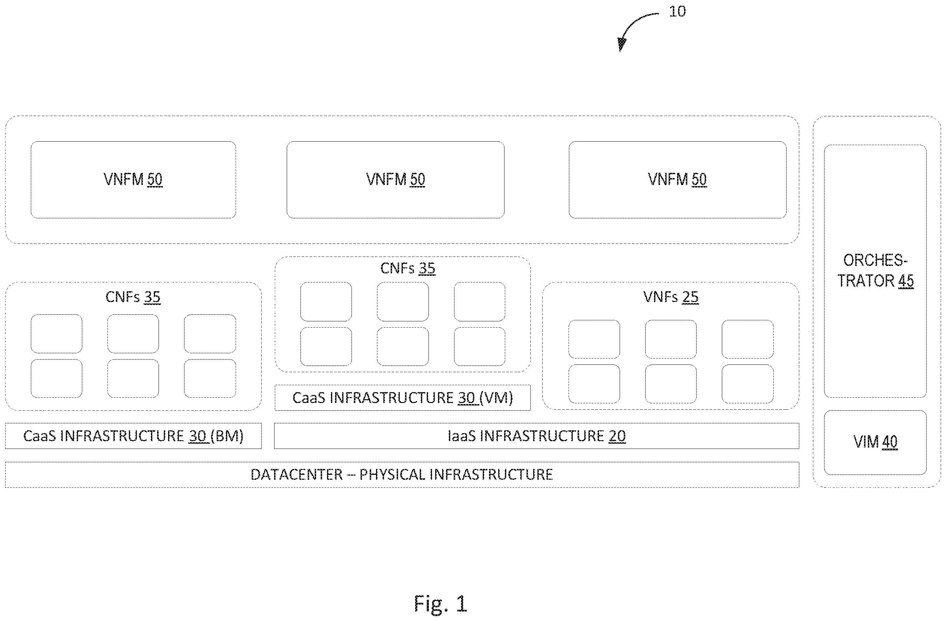

Figure 1 illustrates an exemplary cloud computing model 10 for a communication network using virtualized NFs (VNFs) 25 and containerized NFs (CNFs) 35. Instead of proprietary hardware, the cloud computing model 10 uses industry standard servers, high volume storage and generic networking hardware that are organized into one or more data centers 15. The physical resources of the data centers 15 are shared via a virtualization layer (e.g., OpenStack or VMware) 20 that provides infrastructure as a service (laaS) and/or a containerization layer (e.g., Kubernetes) 30 that provides containers as a service (CaaS). The containerization layer 30 may be deployed on bare metal (BM) or on a virtual machine (VM) provided by the virtualization layer 20. The various NFs in a communication network are implemented as software running on a VM provided by a virtualization layer 20, or in a container provided by a containerization layer 30. The cloud computing model 10 provides ubiquitous, on-demand access to a cloud resources that enable rapid provisioning and configuration of VNFs 25 and CNFs 35.

A NFV Management and Orchestration (MANO) architecture provides a framework for the management and orchestration of the network resources including computing, networking, storage, virtual machine (VM) and container resources. NFV MANO includes three main components: a Virtualized Infrastructure Manager (VIM) 40, a NFV Orchestrator 45 and a Virtual NF Manager (VNFM) 50. The VIM 40 is responsible for controlling, managing, and monitoring the compute, storage, and network hardware provided by the datacenter. The NFV Orchestrator 45 is responsible for resource coordination including the creation, allocation and termination of VMs and containers that are used by the VNFs. The VNFM 50 is responsible for the life cycle management of VNFs and CNFs. VNFM 50 operations include instantiation of VNFs/CNFs 25, 35, scaling of VNFs/CNFs 25, 35, updating and/or upgrading VNFs/CNFs 25, 35 and termination of VNFs/CNFs 25, 35. A VNFM 50 can be assigned to either a single VNF/CNF 25, 35 instance or to multiple VNF/CNF 25, 35 instances. The VNFs/CNFs 25, 35 managed by a VNFM 50 can be all of the same type of NF or a mix of different types of NFs.

VNFMs 50 can be used in conjunction with software-defined network (SDNs) to automate deployment and life cycle management of VNFs/CNFs 25, 35. Generic and vendor-specific VNFMs 50 coordinate with the laaS and CaaS infrastructures and provide automated workflows for routine management functions, such as deploying and upgrading VNFs/CNFs 25, 35 that hide the complexity of the VNF/CNF. When new VNF/CNF 25, 35 instances are deployed, the new VNF/CNF 25, 35 instance needs to be configured according to the specifications of the network operator. To enable self-configuration of VNFs/CNFs 25, 35, either the configuration or reference to a configuration is injected into the VM or container when the VNF/CNF 25, 35 is being deployed. The reference can comprise, for example, a uniform resource locator (URL) or uniform resource indicator (URI) that the VNF/CNF 25, 35 can use to download the configuration from external data storage. Known techniques for injecting a configuration into a VNF/CNF 25, 35 include the use of deployment templates, configuration drives and Helm charts. Once deployed, the VNF/CNF 25, 35 may be upgraded from time to time during the life cycle of the VNF/CNF 25, 35. For this purpose, the VNF/CNF 25, 35 may have a North-Bound Interface (NBI) that enables the network operator to change the configuration of a running VNF/CNF 25, 35.

While complete end-to-end automation throughout the life cycle of the VNF/CNF 25, 35 is a goal, certain aspects of VNF/CNF 25, 35 management have proven difficult to fully achieve without some human intervention. In a cloud-based system, hardware and software may fail, or may need to be upgraded resulting in service disruption. Following a service disruption, the VNF/CNF 25, 35 needs to be restored from backup or re-deployed when the VM or container is restored to an active state. In cloud-based systems, mechanisms for rapid restoration and re-deployment become increasingly important because the VNF/CNF 25, 35 is running on one or two layers of infrastructure that can fail or need to be upgraded resulting in more frequent restoration or deployment of the VNF/CNF 25, 35 during the life cycle of the VNF/CNF 25, 35. After restoration or re-deployment of the VNF/CNF 25, 35, the VNF/CNF 25, 35 will need to be configured. If the configuration of the VNF/CNF 25, 35 has changed, the network operator will typically want to use the most recent configuration. If the VNF/CNF 25, 35 is re-deployed using the same deployment templates/Helm charts used in the original deployment, any changes to the configuration made subsequent to the original deployment will be lost. While the network operator could change the deployment templates/Helm charts when the configuration of the VNF/CNF 25, 35 is changed, updating the deployment templates/Helm charts breaks the end-to-end automation. When the network operator has advance notice of the service disruption, the network operator could backup up the configuration to external storage and use the saved configuration to restore the VNF/CNF 25, 35 to the most recent configuration. This approach requires the network operator to intervene to make the backup and/or to change deployment temples/Helm charts to include a reference to the backup thus breaking the end-to-end automation.

One aspect of the present disclosure is to provide version controlled data storage 100 that enables automated configuration of VNFs/CNFs 25, 35 following deployment or re-deployment of VNF/CNF 25, 35 instances. Elements of the version controlled data storage 100 comprise:
- Persistent external storage for VNF/CNF 25, 35 configurations;
- Version control implemented with tags and metadata to enable identification of different versions of a configuration for a VNF/CNF 25, 35; and
- Use of a stable reference to the VNF/CNF 25, 35 configuration enabling a deployed or re-deployed VNF/CNF 25, 35 to download the most recent configuration for the VNF/CNF 25, 35 following deployment or re-deployment
The version controlled data storage 100 stores immutable copies of NF configurations for a VNF/CNF 25, 35. When a VNF/CNF 25, 35 is created, a deployment template and/or chart is injected into the VNF/CNF 25, 35 instance to enable self-configuration. The deployment template or chart includes a stable reference to a NF configuration stored in the version controlled data storage 100. The same stable reference is used throughout the life cycle of the VNF/CNF 25, 35 to deploy and re-deploy the VNF/CNF 25, 35. The VNF/CNF 25, 35 uses the stable reference to download the NF configuration from the version controlled data storage 100 and configure the VNF/CNF 25, 35. When the configuration of the VNF/CNF 25, 35 is updated after its initial deployment, a new version of the NF configuration is created and stored in the version controlled data storage 100 without overwriting the previous version or versions. This new version of the NF configuration is associated with the same stable reference as the previous versions of the NF configuration. Metadata associated with the different versions of a NF configuration indicates which of two or more different versions is the current version. The collection of different versions of a NF configuration associated with the same stable reference provide a complete history of the NF configuration, thus allowing rollback to any previous version of the NF configuration by simply modifying the metadata to mark that version as the current version. If a VNF/CNF 25, 35 needs to be re-deployed, the same stable reference used during the initial deployment is used to download the most recent version of the NF configuration based on the metadata. Therefore, there is no need for the network operator to modify the deployment template or chart that is injected into the VNF/CNF 25, 35 when it is re-deployed.

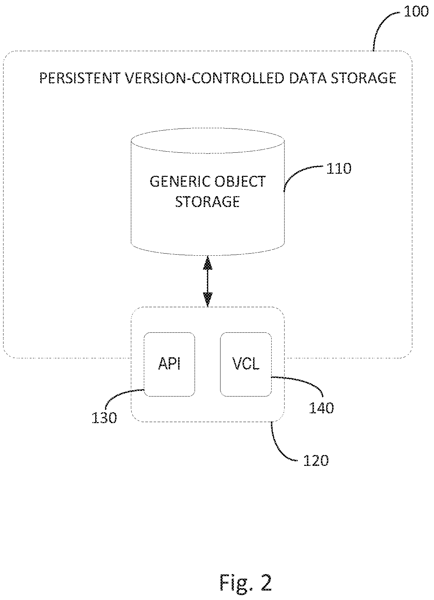

Referring to Figure 2, version-controlled data storage 100 is implemented by two main components: a generic object storage (back-end) 110 for storing configuration objects, referred to herein as configuration artifacts, and an interface controller (front-end) 120 that functions as a gateway between a VNF/CNF 25, 35 and the version controlled data storage 100. The generic object storage 110 provides persistent, highly available storage for both configuration data for NF configuration and metadata for version control of NF configurations. Multiple versions of a NF configuration can be stored in the generic object storage 110 as separate immutable configuration artifacts. The interface controller 120 implements an Application Programming Interface (API) 130 and version control logic (VCL) 140 that enables use of a persistent, unchanging configuration reference throughout the life cycle of the VNF/CNF 25, 35. The API 130 enables VNFs/CNFs 25, 35 or management tools to:
- query the data storage to obtain the version of a NF configuration;
- download a NF configuration using a configuration reference;
- upload/create new versions of the NF configuration (create new configuration artifact);
- list available versions of a NF configuration for a service;
- delete a configuration artifact;
- change metadata associated to a configuration artifact (e.g., add "active" tag to identify the current version for downloading.)

Version control logic 140 implements a version control scheme to enable automatic life cycle management. Metadata associated with the different versions of a NF configuration indicates which of two or more different versions is the current version. The collection of different versions of a NF configuration associated with the same configuration reference provide a complete history of the NF configuration, thus allowing rollback to any previous version of the NF configuration by simply modifying the metadata to mark that version as the current version.

When a VNF/CNF 25, 35 is created, a configuration reference is injected into the VNF/CNF. Due to the version-controlled data storage 100, the configuration reference used during the initial day-0 deployment does not change over the lifetime of the VNF/CNF 25, 35 although the configuration of the VNF/CNF 25, 35 can change. Each version of a NF configuration for a VNF/CNF 25, 35 is stored as a separate immutable configuration artifact in the generic object storage 110 and is associated with the same configuration reference. Metadata associated with each configuration artifact allows the interface controller 120 to retrieve the configuration artifact representing the most recent, or current, version of the NF configuration if it needs to be re-deployed or restored. Thus, the same configuration reference can be used throughout the life cycle of the VNF/CNF 25, 35 to retrieve the most current version of the NF configuration when a VNF/CNF 25, 35 is re-deployed following an infrastructure upgrade or service incident. In practice, the configuration reference can be, for example, an URL.

As an example, a VNF/CNF 25, 35 may have 10 configuration artifacts associated with its configuration reference, all tagged with its unique name "NF-X." One of the ten configuration artifacts can be tagged as "current" in the metadata. When NF-X is re-deployed, it uses the configuration reference provided by the VNFM 50 during deployment to query the API 130 for the configuration data. In response to the query, the interface controller 120 retrieves the configuration artifact tagged as the "current" version of the NF configuration and returns it to the VNF/CNF 25, 35.

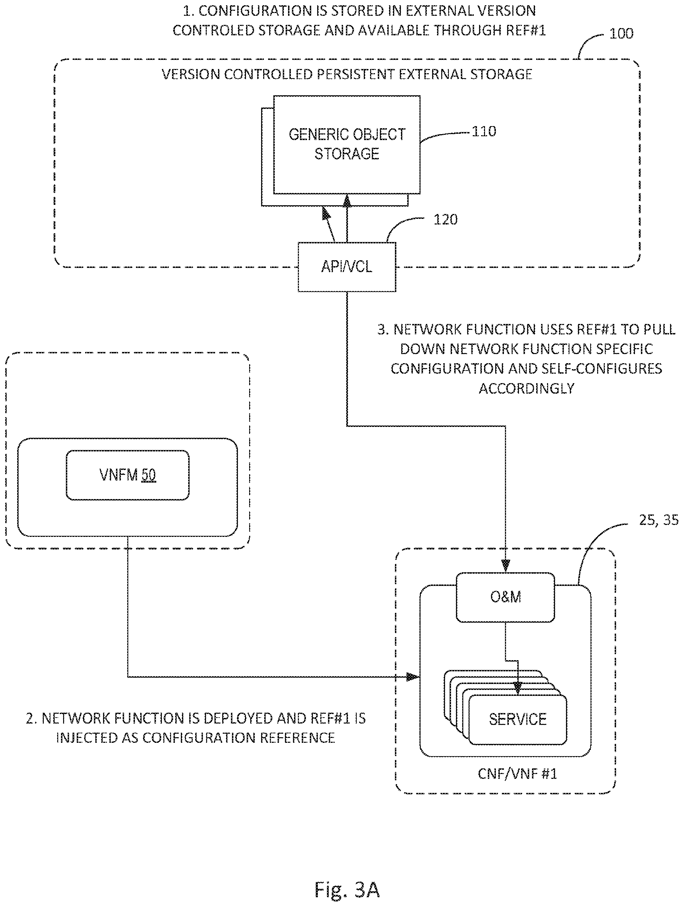

Figures 3A - 3C are high-level signaling flows illustrating how the version-controlled data storage 100 enables automatic life cycle management without manual intervention. In these pictures of life cycle management scenarios, the other actors included in the process (i.e., VNFM 50 and the VNF/CNF 25, 35) are also shown.

Figure 3A illustrates the initial deployment of the VNF/CNF 25, 35. The NF configuration is stored in the version-controlled data storage 100 and is associated with a configuration reference (1). When the VNF/CNF 25, 35 is deployed, a configuration reference pointing to the configuration is injected into the VM or container for the VNF/CNF 25, 35 (2). The VNF/CNF 25, 35 uses the configuration reference to pull down the NF configuration for the VNF/CNF 25, 35 from the version controlled data storage 100 via the API 130 and self-configures accordingly (3).

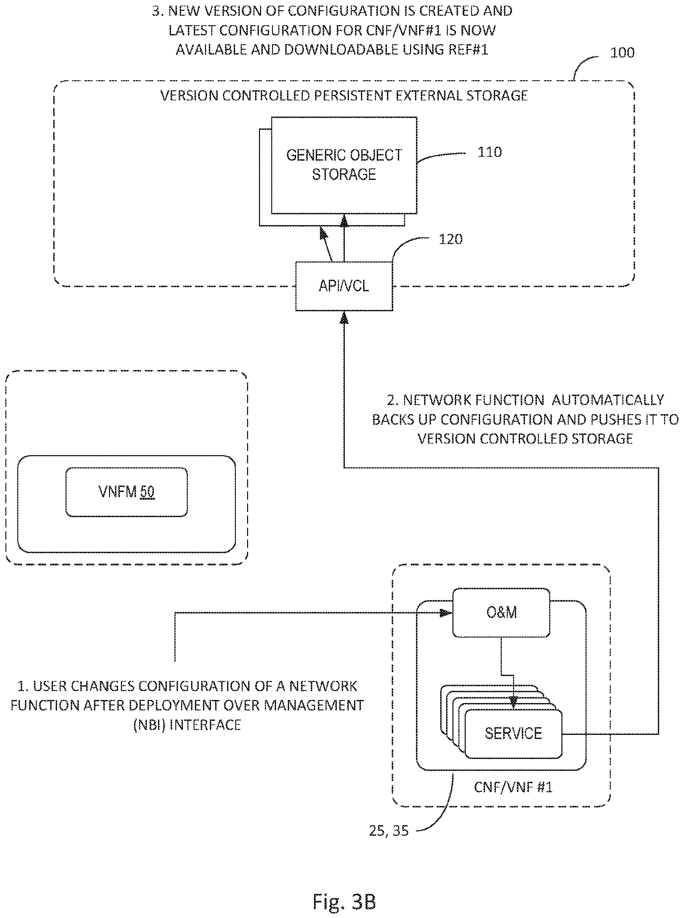

Figure 3B illustrates a configuration change for the VNF/CNF 25, 35. The network operator/user changes the configuration of the VNF/CNF 25, 35 after the initial deployment using the NBI of the VNF/CNF 25, 35 (1). The VNF/CNF 25, 35 automatically backups the configuration and pushes it to the version-controlled data storage 100 via the API 130 a new configuration artifact representing the new version of the NF configuration and associates it with the same configuration reference used in the initial deployment and the new configuration artifact is tagged as "current" versions of the NF configuration (2). In some embodiments, the version controlled data storage 100 may also change the metadata associated with the previous "current" version.

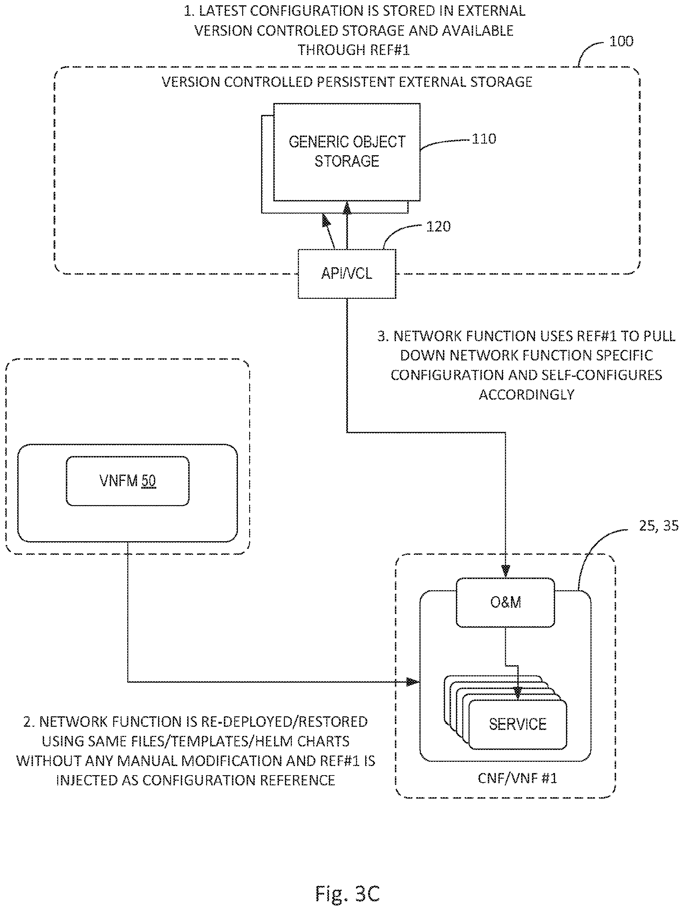

Figure 3C illustrates a re-deployment of the VNF/CNF 25, 35 after the configuration change. The most recent NF configuration is stored in the version controlled data storage 100 and is associated with a configuration reference (1). When the VNF/CNF 25, 35 is re-deployed, the configuration reference, which now points to the most recent configuration, is injected into the VM or container for the VNF/CNF 25, 35 (2). The VNF/CNF 25, 35 uses the configuration reference to pull down the NF configuration for the VNF/CNF 25, 35 tagged as "current" and self-configures accordingly (3).

To highlight the advantages of the version controlled data storage 100 as herein described, comparison of two different signaling flows, one using conventional storage without version control and one using version controlled data storage 100 is illustrative. First, a typical scenario is described using conventional storage without version control.
1. The network operator creates the initial NF configuration and stores it to an version controlled data storage 100. This configuration is downloadable via URL1.
2. The network operator deploys the VNF/CNF 25, 35 and injects URL1 into the VM or container at deployment time. The configuration reference (URL1) is injected in via deployment templates (e.g., Heat orchestration templates, OVF-files, config drive, etc.) in case of VNF 25 and values.yaml/Helm charts or similar method in case of a CNF 35. The files used in deployment (or re-deployment) refer to URL1. The VNFM 50 or orchestrator could also be used to inject such data but problem remains the same. There is some file or descriptor that refers to URL1.
3. When VNF/CNF 25, 35 initializes, it uses URL1 to download the configuration from the version controlled data storage 100 and self-configures accordingly.
4. After the initial deployment, the network operator changes the configuration of the VNF/CNF 25, 35 and the change is backed up to external storage. The latest configuration is now available via reference URL2.
5. Cloud outage results in service disruption of the VNF/CNF 25, 35 requiring re-deployment.
6. The network operator re-deploys the VNF/CNF 25, 35 using one of two methods. In a first method, the network operator manually changes the configuration reference in the deployment templates/charts from URL1 to URL2. This approach requires manual intervention and breaks the end-to-end automation. In a second method, the network operator re-deploys the VNF/CNF 25, 35 using the original deployment templates/charts that include URL1. This approach does not require manual intervention, but the network operator loses the configuration changes done in step 4.

Now, the same scenario is described using version controlled data storage 100 as herein described.
1. The network operator creates initial configuration and stores it to an version controlled data storage 100. This configuration is downloadable via URL1.
2. The network operator deploys the VNF/CNF 25, 35 and injects URL1 into the VM or container at deployment time. The configuration reference (URL1) is injected in via deployment templates (e.g., Heat orchestration templates, OVF-files, config drive, etc.) in case of VNF and values.yaml/Helm charts or similar method in case of a CNF. The files used in deployment (or re-deployment) refer to URL1. The VNFM 50 or orchestrator could also be used to inject such data.
3. When VNF/CNF 25, 35 initializes, it will use URL1 to download the configuration and self-configure accordingly.
4. After the initial deployment, the network operator changes the configuration of the VNF/CNF 25, 35 and the change is backed up to external storage. The new version is associated with URL1 and tagged as "current" by the version control logic 140. Because of version control, there can be multiple configuration artifacts associated with URL1 representing different versions of the NF configuration stored simultaneously in the data storage. In this example, there 2 configuration artifacts available - the original (version1) created by the network operator during the initial deployment and version2 containing the configuration changes made by the network operator. Each configuration artifact in version control is tagged with metadata (like for example name of the VNF/CNF 25, 35) and an attribute indicating whether it is currently active or not. In other words, the tag "current" defines to which configuration artifact URL1 points to. In this case, now that NF configuration was changed, and VNF/CNF 25, 35 pushed the changed version into the version controlled data storage 100 (thus creating a new artifact, a new version of configuration called version2) and tagged it as current, now URL1 points to version2. Unlike the previous example, the latest configuration is now available via URL1.
5. Cloud outage results in service disruption requiring re-deployment of VNF/CNF 25, 35.
6. Operator re-deploys the VNF/CNF 25, 35 using the same deployments templates/charts used in the initial deployment as before. The deployment templates/charts refer to URL1. In this case, the version controlled data storage 100 ensures that URL1 points to version2 now, and not version1 (old version) so there is no need for manual intervention or any loss of data.

The version controlled data storage 100 as herein described also enables centralized management of configuration artifacts which can lead to significant saving in operating expenses for customer: For example, the network operator may have a large number of VNFs/CNFs 25, 35 that need to be changed in order to upgrade a service or provide a new service. Currently, the network operator needs to manually edit the configuration in all VNFs/CNFs 25, 35 in order to maintain consistency and uniformity, which can be time consuming and expensive. When using version controlled data storage 100 as herein described, this kind of upgrade can easily be managed in centralized way. To maintain consistency across many VNFs/CNFs 25, 35, the same configuration reference can be injected into each of the VNFs/CNFs 25, 35 that share a common configuration. Instead of manually editing the configuration for each VNF/CNF 25, 35, the network operator can push a new configuration artifact to the version controlled data storage 100 and tag it as "current." VNFs/CNFs 25, 35 can poll the version controlled data storage 100 to determine whether the deployed version of the NF configuration is current. If not, the VNF/CNF 25, 35 can download the most recent configuration and configure itself accordingly. The network operator dos does not need to log into VNFs/CNFs 25, 35 individually, or worry about whether all VNFs/CNFs 25, 35 are updated. The network operator simply needs to push the new configuration into the version controlled data storage 100 and the configuration changes will be propagated to all VNFs/CNFs 25, 35 injected with the same configuration reference. The automated propagation of the changes can save as 90% of the typically cost of making configuration changes.

The techniques as herein described fully align initial deployment and re-deployment/restoration of the VNF/CNF 25, 35 as use cases/life cycle management operations. Thus, there will be fewer use cases to develop and maintain, and fewer use cases for network operator/user to learn. No manual work or manual intervention is required to automatically re-deploy a VNF/CNF 25, 35 after, for example, an infrastructure upgrade or infrastructure-related incident.

The version control can be implemented as a separate stateless NF or as a microservice by using either tags, metadata or combination of both. The metadata is associated with the configuration artifacts and stored in the version controlled data storage 100.

Using a vendor-specific API and version-control logic as a "gateway" between VNFs/CNFs 25, 35 and data storage (potentially offered by infrastructure) is safer for the NF vendor because the vendor controls the configuration references and the API and avoids costly changes to automation machinery introduced in third party products.

NF configuration management is fully automatic in the life cycle management context enabling the use of both vendor-specific or generic VNFMs 50.

Storage of configurations in version-controlled environment as immutable artifacts enables easy centralized configuration rollback/roll-forward.

The API and version control logic enables centralized management of configuration artifacts used by multiple NFs in the network enabling the network operator to add a configuration artifact in the version controlled data storage 100 to trigger automatic reconfiguration of the VNFs/CNFs 25, 35 in the network which have been injected with a configuration reference associated to the changed configuration artifact.

The version controlled data storage 100 as herein described does not require or have any specific needs when it comes to the format of the stored data. It is fully up to the network operator to determine what data to store and the data format. The data can be encrypted or plain text and therefore this gives full flexibility to application developers for CNFs/VNFs to use this function.

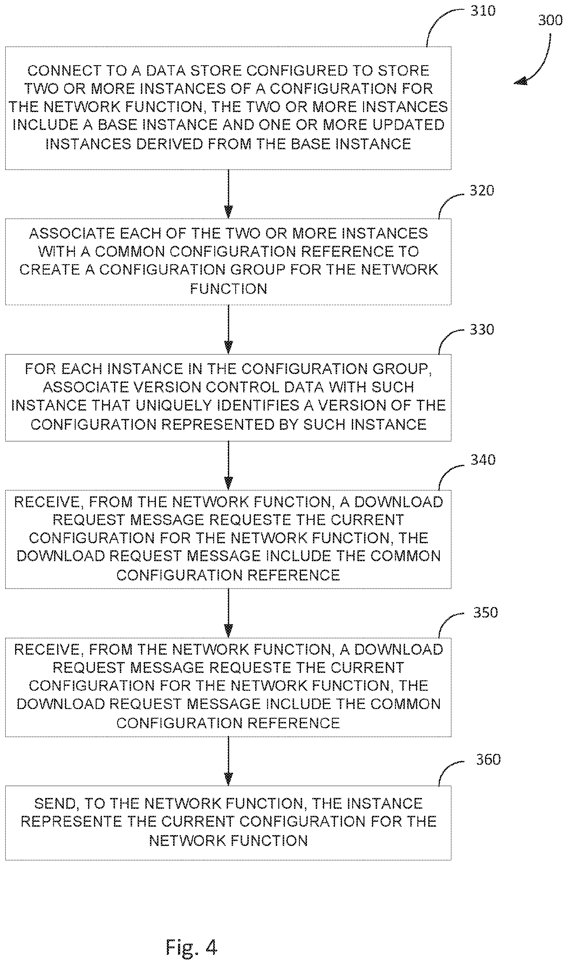

Figure 4 illustrates an exemplary method 300 implemented by an interface controller of storing a configuration for a NF in a communication network. The interface controller 120 connects to a data storage configured to store two or more instances of a configuration for the NF (block 310). The two or more instances include a base instance and one or more updated instances derived from the base instance. The interface controller 120 associates each of the two or more instances with a common configuration reference to create a configuration group for the NF (block 320). For each instance in the configuration group, the interface controller 120 associates version control data with such instance that uniquely identifies a version of the configuration represented by such instance (block 330). The interface controller 120 further receives, from the NF, a download request message requesting the current configuration for the NF (block 340). The download request message includes the common configuration reference. Responsive to the request, the interface controller 120 retrieves, from the data storage, an instance representing the current configuration for the NF selected from the configuration group based on the version control data (block 350). The interface controller 120 sends, to the NF, the instance representing the current configuration for the NF (block 360).

Some embodiments of the method 300 further comprise receiving, from the NF, one or more changes to the current configuration of the NF; storing, in the data storage, a new instance of the configuration based on the changes received from the NF; associating the new instance with the common configuration reference; and associating version control data with the new instance identifying the new instance as the current configuration of the NF.

Some embodiments of the method 300 further comprise modifying the version control data of an instance in the configuration group representing the previous current configuration deprecated by the new instance.

Some embodiments of the method 300 further comprise following a restart of the NF, receiving a second download request message requesting the current configuration for the NF, the second download request message including the configuration reference; retrieving, from the data storage, the new instance of the configuration for the NF as the current configuration; and sending, to the NF, the new instance of the configuration for the NF.

Some embodiments of the method 300 further comprise receiving a status request message from the NF, the status request message including the configuration reference; responsive to the status request message, determining the current version of the configuration for the NF based on the version control information associated with the instances in the configuration group associated with the configuration reference; and sending, to the NF, a status response including an indication whether the currently deployed configuration for the NF is the current configuration.

In some embodiments of the method 300, the status request includes an identifier for the currently deployed version of the configuration and the status response includes a Boolean attribute set to a first value to indicate that the deployed version is the current version and set to a second value to indicate that the deployed version is not the current version.

In some embodiments of the method 300, the status response includes an identifier of the current version of the configuration in the group associated with the configuration reference.

In some embodiments of the method 300, the version control information comprises a tag set to a first value to indicate that the version represented by the instance is the current version of the configuration and set to a second value to indicate that the version represented by the instance is not the current version of the configuration.

In some embodiments of the method 300, the version control information comprises an identifier that uniquely identifier a version of the configuration in a configuration group associated with the configuration reference.

In some embodiments of the method 300, the version control information comprises a timestamp.

In some embodiments of the method 300, the version control information comprises a service type identifier identifying a service associated with the instance.

In some embodiments of the method 300, the version control information comprises a control attribute for controlling management operations on the instance.

In some embodiments of the method 300, the configuration reference comprises a uniform resource indicator or uniform resource locator.

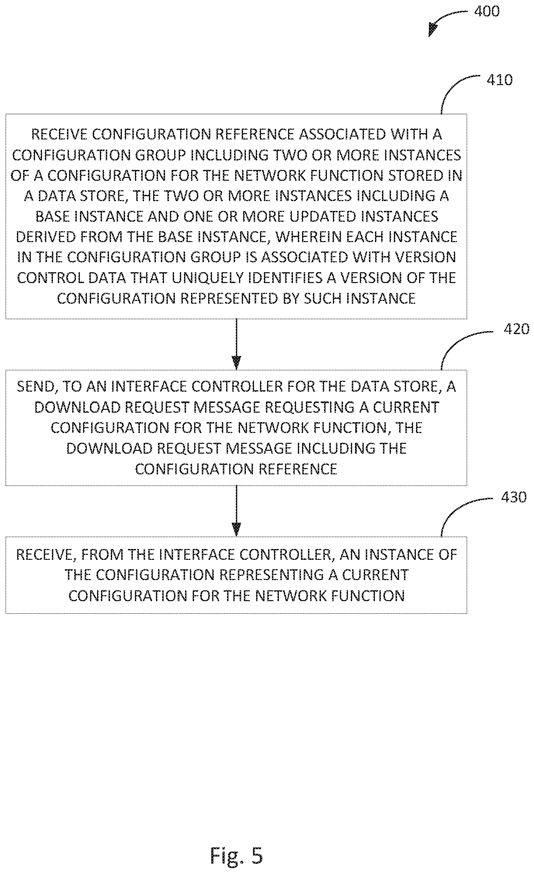

Figure 5 illustrates an exemplary method 400 implemented by a NF in a communication network. The NF receives a configuration reference associated with a configuration group including two or more instances of a configuration for the NF stored in a data storage (block 410). The two or more instances including a base instance and one or more updated instances derived from the base instance. Each instance in the configuration group is associated with version control data that uniquely identifies a version of the configuration represented by such instance. The NF sends, to an interface controller 120 for the data storage, a download request message requesting a current configuration for the NF, the download request message including the configuration reference, and receiving, from the interface controller 120, an instance of the configuration representing a current configuration for the NF.

Some embodiments of the method 400 further comprise sending, to the interface controller 120, one or more changes to a deployed configuration of the NF to be stored in the data storage as a new instance representing a changed version of the configuration for the NF. The changed version is associated by the interface controller 120 with version control data identifying the charged version of the configuration as the current version.

Some embodiments of the method 400 further comprise, following a restart of the NF, sending a second download request message requesting a current configuration for the NF, the second download request message including the configuration reference; and receiving, from the interface controller 120, the new instance of the configuration for the NF as the current configuration.

Some embodiments of the method 400 further comprise sending a status request message to the interface controller 120, the status request message including the configuration reference; receiving, from the NF, an status response including an indication whether the currently deployed configuration for the NF is the current configuration.

In some embodiments of the method 400, the status request includes an identifier for the currently deployed version of the configuration and the status response includes a Boolean attribute set to a first value to indicate that the deployed version is the current version and set to a second value to indicate that the deployed version is not the current version.

In some embodiments of the method 400, the status response includes an identifier of the current version of the configuration in the configuration group associated with the configuration reference.

In some embodiments of the method 400, the configuration reference comprises a uniform resource indicator or uniform resource locator.

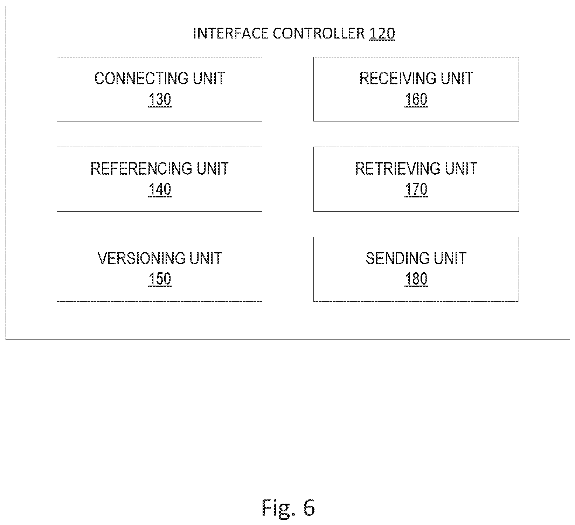

Figure 6 illustrates an interface controller 120 configured to operate as herein described. The interface controller 120 comprises a connecting unit 130, referencing unit 140, versioning unit 150, receiving unit 160, retrieving unit 170 and sending unit 180. The various units 130- 180 can be implemented by hardware and/or by software code that is executed by one or more processors or processing circuits. The connecting unit 130 is configured to connect to a data storage configured to store two or more instances of a configuration for the NF. The two or more instances include a base instance and one or more updated instances derived from the base instance. The referencing unit 140 is configured to associate each of the two or more instances with a common configuration reference to create a configuration group for the NF. The versioning unit 150 is configured to, for each instance in the configuration group, associate version control data with such instance that uniquely identifies a version of the configuration represented by such instance. The receiving unit 160 is configured to receive a download request message requesting the current configuration for the NF. The download request message includes the common configuration reference. The retrieving unit 170 is configured to retrieve, from the data storage, an instance representing the current configuration for the NF selected from the configuration group based on the version control data. The sending unit 180 is configured to send, to the NF, the instance representing the current configuration for the NF.

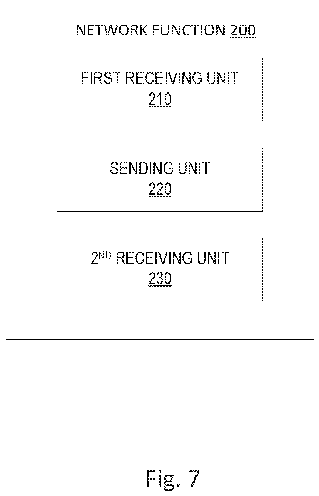

Figure 7 illustrates a NF 200 in a communication network. The NF 200 comprises a first receiving unit 210, a sending unit 220 and a second receiving unit 230. The various units 210 - 230 can be implemented by hardware and/or by software code that is executed by one or more processors or processing circuits. first receiving unit 210 configured to receive a configuration reference associated with a configuration group including two or more instances of a configuration for the NF stored in a data storage. The two or more instances including a base instance and one or more updated instances derived from the base instance. Each instance in the configuration group is associated with version control data that uniquely identifies a version of the configuration represented by such instance. The NF further comprises a sending unit configured to send, to an interface controller 120 for the data storage, a download request message requesting a current configuration for the NF, the download request message including the configuration reference. The second receiving unit 230 is configured to receive, from the interface controller 120, an instance of the configuration representing a current configuration for the NF.

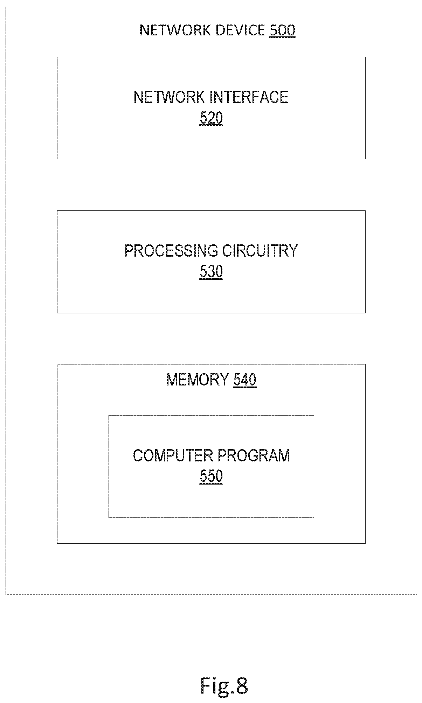

Figure 8 illustrates a network device 500 that can be configured as an interface controller 120 or NF. The network device 500 comprises a communication circuitry 510 for communicating over a communication network with other network devices, processing circuitry 530 and memory 540.

The communication circuitry 520 comprises circuitry for communicating with other network devices over a communication network. The processing circuitry 530 controls the overall operation of the network node 500 and implements one or more of the procedures as herein described. The processing circuitry 530 may comprise one or more microprocessors, hardware, firmware, or a combination thereof. The processing circuitry 530 is configured to perform the methods as herein described.

Memory 540 comprises both volatile and non-volatile memory for storing computer program code and data needed by the processing circuitry 530 for operation. Memory 540 may comprise any tangible, non-transitory computer-readable storage medium for storing data including electronic, magnetic, optical, electromagnetic, or semiconductor data storage. Memory 540 stores a computer program 550 comprising executable instructions that configure the processing circuitry 530 to implement the procedures and methods as described herein. A computer program 550 in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 550 for configuring the processing circuitry 530 as herein described may be stored in a removable memory, such as a portable compact disc, portable digital video disc, or other removable media. The computer program 550 may also be embodied in a carrier such as an electronic signal, optical signal, radio signal, or computer readable storage medium.

Those skilled in the art will also appreciate that embodiments herein further include corresponding computer programs. A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described.

## Claims

1. A method (300) implemented by an interface controller (120) of storing a configuration for a network function (25, 35, 200) in a communication network, the method (300) comprising:
connecting (310) to a data storage configured to store two or more instances of a configuration for the network function (25, 35, 200), the two or more instances including a base instance and one or more updated instances derived from the base instance;
associating (320) each of the two or more instances with a common configuration reference to create a configuration group for the network function (25, 35, 200);
for each instance in the configuration group, associating (330) version control data with such instance that uniquely identifies a version of the configuration represented by such instance;
receiving (340), from the network function (25, 35, 200), a download request message requesting the current configuration for the network function (25, 35, 200), the download request message including the common configuration reference;
retrieving (350), from the data storage, an instance representing the current configuration for the network function (25, 35, 200) selected from the configuration group based on the version control data; and
sending (360), to the network function (25, 35, 200), the instance representing the current configuration for the network function (25, 35, 200).

2. The method (300) of claim 1, further comprising:
receiving, from the network function (25, 35, 200), one or more changes to the current configuration of the network function (25, 35, 200);
storing, in the data storage, a new instance of the configuration based on the changes received from the network function (25, 35, 200);
associating the new instance with the common configuration reference; and
associating version control data with the new instance identifying the new instance as the current configuration of the network function (25, 35, 200); and, optionally, further comprising:
(i) modifying the version control data of an instance in the configuration group representing the previous current configuration deprecated by the new instance; and/or
(ii) following a restart of the network function (25, 35, 200), receiving a second download request message requesting the current configuration for the network function (25, 35, 200), the second download request message including the common configuration reference;
retrieving, from the data storage, the new instance of the configuration for the network function (25, 35, 200) as the current configuration; and
sending, to the network function (25, 35, 200), the new instance of the configuration for the network function (25, 35, 200).

3. The method (300) of any one of claim 1-2, further comprising:
receiving a status request message from the network function (25, 35, 200), the status request message including the common configuration reference;
responsive to the status request message, determining the current version of the configuration for the network function (25, 35, 200) based on the version control information associated with the instances in the configuration group associated with the common configuration reference;
sending, to the network function (25, 35, 200), a status response including an indication whether the currently deployed configuration for the network function (25, 35, 200) is the current configuration; and, optionally, wherein
(i) the status request includes an identifier for the currently deployed version of the configuration and the status response includes a Boolean attribute set to a first value to indicate that the deployed version is the current version and set to a second value to indicate that the deployed version is not the current version; or
(ii) the status response includes an identifier of the current version of the configuration in the group associated with the common configuration reference.

4. The method (300) of any one of claims 1 - 3, wherein
(i) the version control information comprises a tag set to a first value to indicate that the version represented by the instance is the current version of the configuration and set to a second value to indicate that the version represented by the instance is not the current version of the configuration; or
(ii) the version control information comprises an identifier that uniquely identifier a version of the configuration in a configuration group associated with the common configuration reference; or
(iii) the version control information comprises a timestamp; or
(iv) the version control information comprises a service type identifier identifying a service associated with the instance; or
(v) the version control information comprises a control attribute for controlling management operations on the instance.

5. The method (300) of any one of claims 1 - 4, wherein the common configuration reference comprises a uniform resource indicator or uniform resource locator.

6. A method (400) implemented by a network function (25, 35, 200) in a communication network, the method (400) comprising:
receiving (410), from a data storage, a common configuration reference associated with a configuration group including two or more instances of a configuration for the network function (25, 35, 200) stored in the data storage, the two or more instances including a base instance and one or more updated instances derived from the base instance, wherein each instance in the configuration group is associated with version control data that uniquely identifies a version of the configuration represented by such instance;
sending (420), to an interface controller (120) for the data storage, a download request message requesting a current configuration for the network function (25, 35, 200), the download request message including the common configuration reference; and
receiving (430), from the interface controller (120), an instance of the configuration representing a current configuration for the network function (25, 35, 200).

7. The method (400) of claim 6, further comprising:
sending, to the interface controller (120), one or more changes to a deployed configuration of the network function (25, 35, 200) to be stored in the data storage as a new instance representing a changed version of the configuration for the network function (25, 35, 200); and
wherein the changed version is associated by the interface controller (120) with version control data identifying the charged version of the configuration as the current version; and, optionally, further comprising:
following a restart of the network function (25, 35, 200), sending a second download request message requesting a current configuration for the network function (25, 35, 200), the second download request message including the common configuration reference; and
receiving, from the interface controller (120), the new instance of the configuration for the network function (25, 35, 200) as the current configuration.

8. The method (400) of claim 6, further comprising:
sending a status request message to the interface controller (120), the status request message including the common configuration reference; and
receiving, from the network function (25, 35, 200), an status response including an indication whether the currently deployed configuration for the network function (25, 35, 200) is the current configuration; and, optionally, wherein
(i) the status request includes an identifier for the currently deployed version of the configuration and the status response includes a Boolean attribute set to a first value to indicate that the deployed version is the current version and set to a second value to indicate that the deployed version is not the current version; or
(ii) the status response includes an identifier of the current version of the configuration in the configuration group associated with the common configuration reference.

9. The method (400) of any one of claims 6 - 8, wherein the common configuration reference comprises a uniform resource indicator or uniform resource locator.

10. An interface controller (120) for version controlled data storage in a communication network, the interface controller (120) being configured to:
connect to a data storage configured to store two or more instances of a configuration for the network function (25, 35, 200), the two or more instances including a base instance and one or more updated instances derived from the base instance;
associate each of the two or more instances with a common configuration reference to create a configuration group for the network function (25, 35, 200);
for each instance in the configuration group, associate version control data with such instance that uniquely identifies a version of the configuration represented by such instance;
receive, from the network function (25, 35, 200), a download request message requesting the current configuration for the network function (25, 35, 200), the download request message including the common configuration reference;
retrieve, from the data storage, an instance representing the current configuration for the network function (25, 35, 200) selected from the configuration group based on the version control data; and
send, to the network function (25, 35, 200), the instance representing the current configuration for the network function (25, 35, 200).

11. The interface controller (120) of claim 10 further configured to perform the method of any one of claims 2 - 5.

12. A network function (25, 35, 200, 500) in a communication network, the network function (25, 35, 200) being configured to:
receive, from a data storage, a common configuration reference associated with a configuration group including two or more instances of a configuration for the network function (25, 35, 200) stored in the data storage, the two or more instances including a base instance and one or more updated instances derived from the base instance, wherein each instance in the configuration group is associated with version control data that uniquely identifies a version of the configuration represented by such instance;
send, to an interface controller (120) for the data storage, a download request message requesting a current configuration for the network function (25, 35, 200), the download request message including the common configuration reference; and
receive, from the interface controller (120), an instance of the configuration representing a current configuration for the network function (25, 35, 200).

13. The network function (25, 35, 200, 500) of claim 12 further configured to perform the method of any one of claims 7 - 9.

14. A computer program comprising executable instructions that,
i) when executed by a processing circuit in an interface controller (120) for version controlled data storage, causes the interface controller (120) to perform any one of the methods of claims 1 - 5; or
ii) when executed by a processing circuit in a network function (25, 35, 200), causes the network function (25, 35, 200) to perform any one of the methods of claims 6 - 9.

15. A carrier containing a computer program of claim 14 wherein the carrier is one of an electronic signal, optical signal, radio signal, or computer readable storage medium.

## Patentansprüche

1. Verfahren (300), das von einer Schnittstellensteuerung (120) implementiert wird, zum Speichern einer Konfiguration für eine Netzwerkfunktion (25, 35, 200) in einem Kommunikationsnetzwerk, wobei das Verfahren (300) umfasst:
Herstellen einer Verbindung (310) zu einem Datenspeicher, der zum Speichern von zwei oder mehr Instanzen einer Konfiguration für die Netzwerkfunktion (25, 35, 200) konfiguriert ist, wobei die zwei oder mehr Instanzen eine Basisinstanz und eine oder mehrere aktualisierte Instanzen umfassen, die von der Basisinstanz abgeleitet sind;
Assoziieren (320) jeder der zwei oder mehr Instanzen mit einer gemeinsamen Konfigurationsreferenz, um eine Konfigurationsgruppe für die Netzwerkfunktion (25, 35, 200) zu erstellen;
Assoziieren (330) von Versionskontrolldaten mit solch einer Instanz, die eine Version der durch solch eine Instanz dargestellten Konfiguration eindeutig identifiziert, für jede Instanz in der Konfigurationsgruppe;
Empfangen (340) einer Download-Anforderungsnachricht, die die aktuelle Konfiguration für die Netzwerkfunktion (25, 35, 200) anfordert, von der Netzwerkfunktion (25, 35, 200), wobei die Download-Anforderungsnachricht die gemeinsame Konfigurationsreferenz umfasst;
Abrufen (350) einer Instanz, die die aktuelle Konfiguration für die Netzwerkfunktion (25, 35, 200) darstellt und basierend auf den Versionskontrolldaten aus der Konfigurationsgruppe ausgewählt wird, vom Datenspeicher; und
Senden (360) der Instanz, die die aktuelle Konfiguration für die Netzwerkfunktion (25, 35, 200) darstellt, an die Netzwerkfunktion (25, 35, 200).

2. Verfahren (300) nach Anspruch 1, ferner umfassend:
Empfangen einer oder mehrerer Änderungen an der aktuellen Konfiguration der Netzwerkfunktion (25, 35, 200) von der Netzwerkfunktion (25, 35, 200);
Speichern einer neuen Instanz der Konfiguration im Datenspeicher basierend auf den von der Netzwerkfunktion (25, 35, 200) empfangenen Änderungen;
Assoziieren der neuen Instanz mit der gemeinsamen Konfigurationsreferenz; und
Assoziieren von Versionskontrolldaten mit der neuen Instanz, die die neue Instanz als die aktuelle Konfiguration der Netzwerkfunktion (25, 35, 200) identifizieren; und optional ferner umfassend:
(i) Modifizieren der Versionskontrolldaten einer Instanz in der Konfigurationsgruppe, die die vorherige aktuelle Konfiguration darstellt, die durch die neue Instanz verworfen wird; und/oder
(ii) Empfangen einer zweiten Download-Anforderungsnachricht, die die aktuelle Konfiguration für die Netzwerkfunktion (25, 35, 200) anfordert, nach einem Neustart der Netzwerkfunktion (25, 35, 200), wobei die zweite Download-Anforderungsnachricht die gemeinsame Konfigurationsreferenz umfasst;
Abrufen der neuen Instanz der Konfiguration für die Netzwerkfunktion (25, 35, 200) vom Datenspeicher als die aktuelle Konfiguration; und
Senden der neuen Instanz der Konfiguration für die Netzwerkfunktion (25, 35, 200) an die Netzwerkfunktion (25, 35, 200).

3. Verfahren (300) nach einem der Ansprüche 1 bis 2, ferner umfassend:
Empfangen einer Statusanforderungsnachricht von der Netzwerkfunktion (25, 35, 200), wobei die Statusanforderungsnachricht die gemeinsame Konfigurationsreferenz umfasst;
Bestimmen der aktuellen Version der Konfiguration für die Netzwerkfunktion (25, 35, 200) basierend auf den Versionskontrollinformationen, die mit den Instanzen in der Konfigurationsgruppe assoziiert sind, die mit der gemeinsamen Konfigurationsreferenz assoziiert sind, in Reaktion auf die Statusanforderungsnachricht;
Senden einer Statusantwort, die eine Angabe umfasst, ob die gegenwärtig eingesetzte Konfiguration für die Netzwerkfunktion (25, 35, 200) die aktuelle Konfiguration ist, an die Netzwerkfunktion (25, 35, 200); und wobei optional:
(i) die Statusanforderung eine Kennung für die gegenwärtig eingesetzte Version der Konfiguration umfasst und die Statusantwort ein boolesches Attribut umfasst, das auf einen ersten Wert gesetzt wird, um anzugeben, dass die eingesetzte Version die aktuelle Version ist, und auf einen zweiten Wert gesetzt wird, um anzugeben, dass die eingesetzte Version nicht die aktuelle Version ist; oder
(ii) die Statusantwort eine Kennung der aktuellen Version der Konfiguration in der Gruppe umfasst, die mit der gemeinsamen Konfigurationsreferenz assoziiert ist.

4. Verfahren (300) nach einem der Ansprüche 1 bis 3, wobei:
(i) die Versionskontrollinformationen ein Tag umfassen, das auf einen ersten Wert gesetzt wird, um anzugeben, dass die durch die Instanz dargestellte Version die aktuelle Version der Konfiguration ist, und auf einen zweiten Wert gesetzt wird, um anzugeben, dass die durch die Instanz dargestellte Version nicht die aktuelle Version der Konfiguration ist; oder
(ii) die Versionskontrollinformationen eine Kennung umfassen, die eine Version der Konfiguration in einer Konfigurationsgruppe, die mit der gemeinsamen Konfigurationsreferenz assoziiert ist, eindeutig identifiziert; oder
(iii) die Versionskontrollinformationen einen Zeitstempel umfassen; oder
(iv) die Versionskontrollinformationen eine Diensttypkennung umfassen, die einen mit der Instanz assoziierten Dienst identifiziert; oder
(v) die Versionskontrollinformationen ein Steuerattribut zum Steuern von Verwaltungsoperationen an der Instanz umfassen.

5. Verfahren (300) nach einem der Ansprüche 1 bis 4, wobei die gemeinsame Konfigurationsreferenz einen Uniform Resource Indicator oder Uniform Resource Locator umfasst.

6. Verfahren (400), das von einer Netzwerkfunktion (25, 35, 200) in einem Kommunikationsnetzwerk implementiert wird, wobei das Verfahren (400) umfasst:
Empfangen (410) einer gemeinsamen Konfigurationsreferenz von einem Datenspeicher, die mit einer Konfigurationsgruppe assoziiert ist, die zwei oder mehr Instanzen einer Konfiguration für die Netzwerkfunktion (25, 35, 200) umfasst, die im Datenspeicher gespeichert sind, wobei die zwei oder mehr Instanzen eine Basisinstanz und eine oder mehrere aktualisierte Instanzen umfassen, die von der Basisinstanz abgeleitet sind, wobei jede Instanz in der Konfigurationsgruppe mit Versionskontrolldaten assoziiert ist, die eine Version der durch solch eine Instanz dargestellte Konfiguration eindeutig identifizieren;
Senden (420) einer Download-Anforderungsnachricht, die eine aktuelle Konfiguration für die Netzwerkfunktion (25, 35, 200) anfordert, an eine Schnittstellensteuerung (120) für den Datenspeicher, wobei die Download-Anforderungsnachricht die gemeinsame Konfigurationsreferenz umfasst; und
Empfangen (430) einer Instanz der Konfiguration, die eine aktuelle Konfiguration für die Netzwerkfunktion (25, 35, 200) darstellt, von der Schnittstellensteuerung (120).

7. Verfahren (400) nach Anspruch 6, ferner umfassend:
Senden einer oder mehrerer Änderungen an einer eingesetzten Konfiguration der Netzwerkfunktion (25, 35, 200), die im Datenspeicher als neue Instanz gespeichert werden sollen, die eine geänderte Version der Konfiguration für die Netzwerkfunktion (25, 35, 200) darstellt, an die Schnittstellensteuerung (120); und
wobei die geänderte Version von der Schnittstellensteuerung (120) mit Versionskontrolldaten assoziiert wird, die die geänderte Version der Konfiguration als die aktuelle Version identifizieren; und optional ferner umfassend:
Senden einer zweiten Download-Anforderungsnachricht, die eine aktuelle Konfiguration für die Netzwerkfunktion (25, 35, 200) anfordert, nach einem Neustart der Netzwerkfunktion (25, 35, 200), wobei die zweite Download-Anforderungsnachricht die gemeinsame Konfigurationsreferenz umfasst;
Empfangen der neuen Instanz der Konfiguration für die Netzwerkfunktion (25, 35, 200) von der Schnittstellensteuerung (120) als die aktuelle Konfiguration.

8. Verfahren (400) nach Anspruch 6, ferner umfassend:
Senden einer Statusanforderungsnachricht an die Schnittstellensteuerung (120), wobei die Statusanforderungsnachricht die gemeinsame Konfigurationsreferenz umfasst; und
Empfangen einer Statusantwort, die eine Angabe umfasst, ob die gegenwärtig eingesetzte Konfiguration für die Netzwerkfunktion (25, 35, 200) die aktuelle Konfiguration ist, von der Netzwerkfunktion (25, 35, 200); und optional wobei
(i) die Statusanforderung eine Kennung für die gegenwärtig eingesetzte Version der Konfiguration umfasst und die Statusantwort ein boolesches Attribut umfasst, das auf einen ersten Wert gesetzt wird, um anzugeben, dass die eingesetzte Version die aktuelle Version ist, und auf einen zweiten Wert gesetzt wird, um anzugeben, dass die eingesetzte Version nicht die aktuelle Version ist; oder
(ii) die Statusantwort eine Kennung der aktuellen Version der Konfiguration in der Konfigurationsgruppe umfasst, die mit der gemeinsamen Konfigurationsreferenz assoziiert ist.

9. Verfahren (400) nach einem der Ansprüche 6 bis 8, wobei die gemeinsame Konfigurationsreferenz einen Uniform Resource Indicator oder Uniform Resource Locator umfasst.

10. Schnittstellensteuerung (120) zur Versionskontrolldatenspeicherung in einem Kommunikationsnetzwerk, wobei die Schnittstellensteuerung (120) konfiguriert ist zum:
Herstellen einer Verbindung zu einem Datenspeicher, der zum Speichern von zwei oder mehr Instanzen einer Konfiguration für die Netzwerkfunktion (25, 35, 200) konfiguriert ist, wobei die zwei oder mehr Instanzen eine Basisinstanz und eine oder mehrere aktualisierte Instanzen umfassen, die von der Basisinstanz abgeleitet sind;
Assoziieren jeder der zwei oder mehr Instanzen mit einer gemeinsamen Konfigurationsreferenz, um eine Konfigurationsgruppe für die Netzwerkfunktion (25, 35, 200) zu erstellen;
Assoziieren von Versionskontrolldaten mit solch einer Instanz, die eine Version der durch solch eine Instanz dargestellten Konfiguration eindeutig identifiziert, für jede Instanz in der Konfigurationsgruppe;
Empfangen einer Download-Anforderungsnachricht, die die aktuelle Konfiguration für die Netzwerkfunktion (25, 35, 200) anfordert, von der Netzwerkfunktion (25, 35, 200), wobei die Download-Anforderungsnachricht die gemeinsame Konfigurationsreferenz umfasst;
Abrufen einer Instanz, die die aktuelle Konfiguration für die Netzwerkfunktion (25, 35, 200) darstellt und basierend auf den Versionskontrolldaten aus der Konfigurationsgruppe ausgewählt wird, vom Datenspeicher; und
Senden der Instanz, die die aktuelle Konfiguration für die Netzwerkfunktion (25, 35, 200) darstellt, an die Netzwerkfunktion (25, 35, 200).

11. Schnittstellensteuerung (120) nach Anspruch 10, die ferner zum Durchführen des Verfahrens nach einem der Ansprüche 2 bis 5 konfiguriert ist.

12. Netzwerkfunktion (25, 35, 200, 500) in einem Kommunikationssystem, wobei die Netzwerkfunktion (25, 35, 200) konfiguriert ist zum:
Empfangen einer gemeinsamen Konfigurationsreferenz von einem Datenspeicher, die mit einer Konfigurationsgruppe assoziiert ist, die zwei oder mehr Instanzen einer Konfiguration für die Netzwerkfunktion (25, 35, 200) umfasst, die im Datenspeicher gespeichert sind, wobei die zwei oder mehr Instanzen eine Basisinstanz und eine oder mehrere aktualisierte Instanzen umfassen, die von der Basisinstanz abgeleitet sind, wobei jede Instanz in der Konfigurationsgruppe mit Versionskontrolldaten assoziiert ist, die eine Version der durch solch eine Instanz dargestellte Konfiguration eindeutig identifizieren;
Senden einer Download-Anforderungsnachricht, die eine aktuelle Konfiguration für die Netzwerkfunktion (25, 35, 200) anfordert, an eine Schnittstellensteuerung (120) für den Datenspeicher, wobei die Download-Anforderungsnachricht die gemeinsame Konfigurationsreferenz umfasst; und
Empfangen einer Instanz der Konfiguration, die eine aktuelle Konfiguration für die Netzwerkfunktion (25, 35, 200) darstellt, von der Schnittstellensteuerung (120) .

13. Netzwerkfunktion (25, 35, 200, 500) nach Anspruch 12, die ferner zum Durchführen des Verfahrens nach einem der Ansprüche 7 bis 9 konfiguriert ist.

14. Computerprogramm, umfassend ausführbare Anweisungen, die
i) bei Ausführung durch eine Verarbeitungsschaltung in einer Schnittstellensteuerung (120) zur Versionskontrolldatenspeicherung die Schnittstellensteuerung (120) zum Durchführen eines der Verfahren nach Anspruch 1 bis 5 veranlassen; oder
i) bei Ausführung durch eine Verarbeitungsschaltung in einer Netzwerkfunktion (25, 35, 200) die Netzwerkfunktion (25, 35, 200) zum Durchführen eines der Verfahren nach Anspruch 6 bis 9 veranlassen.

15. Datenträger, der ein Computerprogramm nach Anspruch 14 enthält, wobei der Datenträger eines von einem elektronischen Signal, einem optischen Signal, einem Funksignal oder einem computerlesbaren Speichermedium ist.

## Revendications

1. Procédé (300) mis en œuvre par un dispositif de commande d'interface (120) destiné à stocker une configuration pour une fonction de réseau (25, 35, 200) dans un réseau de communication, le procédé (300) comprenant :
la connexion (310) à un stockage de données configuré pour stocker deux instances ou plus d'une configuration pour la fonction de réseau (25, 35, 200), les deux instances ou plus incluant une instance de base et une ou plusieurs instances mises à jour dérivées de l'instance de base ;
l'association (320) de chacune des deux instances ou plus à une référence de configuration commune pour créer un groupe de configurations pour la fonction de réseau (25, 35, 200) ;
pour chaque instance dans le groupe de configurations, l'association (330) de données de commande de version à une telle instance qui identifient de manière unique une version de la configuration représentée par une telle instance ;
la réception (340), depuis la fonction de réseau (25, 35, 200), d'un message de demande de téléchargement demandant la configuration courante pour la fonction de réseau (25, 35, 200), le message de demande de téléchargement incluant la référence de configuration commune ;
la récupération (350), depuis le stockage de données, d'une instance représentant la configuration courante pour la fonction de réseau (25, 35, 200) sélectionnée parmi le groupe de configurations sur la base des données de commande de version ; et
l'envoi (360), à la fonction de réseau (25, 35, 200), de l'instance représentant la configuration courante pour la fonction de réseau (25, 35, 200).

2. Procédé (300) selon la revendication 1, comprenant en outre :
la réception, depuis la fonction de réseau (25, 35, 200), d'un ou plusieurs changements de la configuration courante de la fonction de réseau (25, 35, 200) ;
le stockage, dans le stockage de données, d'une nouvelle instance de la configuration sur la base des changements reçus depuis la fonction de réseau (25, 35, 200) ;
l'association de la nouvelle instance à la référence de configuration commune ; et
l'association de données de commande de version à la nouvelle instance identifiant la nouvelle instance en tant que la configuration courante de la fonction de réseau (25, 35, 200) ; et facultativement comprenant en outre :
(i) la modification des données de commande de version d'une instance dans le groupe de configurations représentant la configuration courante précédente rendue obsolète par la nouvelle instance ; et/ou
(ii) à la suite d'un redémarrage de la fonction de réseau (25, 35, 200), la réception d'un deuxième message de demande de téléchargement demandant la configuration courante pour la fonction de réseau (25, 35, 200), le deuxième message de demande de téléchargement incluant la référence de configuration commune ;
la récupération, depuis le stockage de données, de la nouvelle instance de la configuration pour la fonction de réseau (25, 35, 200) en tant que la configuration courante ; et
l'envoi, à la fonction de réseau (25, 35, 200), de la nouvelle instance de la configuration pour la fonction de réseau (25, 35, 200).

3. Procédé (300) selon la revendication 1 ou 2, comprenant en outre :
la réception d'un message de demande de statut depuis la fonction de réseau (25, 35, 200), le message de demande de statut incluant la référence de configuration commune ;
en réponse au message de demande de statut, la détermination de la version courante de la configuration pour la fonction de réseau (25, 35, 200) sur la base des informations de commande de version associées aux instances dans le groupe de configurations associé à la référence de configuration commune ;
l'envoi, à la fonction de réseau (25, 35, 200), d'une réponse de statut incluant une indication si la configuration couramment déployée pour la fonction de réseau (25, 35, 200) est ou non la configuration courante ; et facultativement dans lequel
(i) la demande de statut inclut un identifiant pour la version couramment déployée de la configuration et la réponse de statut inclut un attribut booléen défini à une première valeur pour indiquer que la version déployée est la version courante et défini à une deuxième valeur pour indiquer que la version déployée n'est pas la version courante ; ou
(ii) la réponse de statut inclut un identifiant de la version courante de la configuration dans le groupe associé à la référence de configuration commune.

4. Procédé (300) selon l'une quelconque des revendications 1 à 3, dans lequel
(i) les informations de commande de version comprennent une étiquette définie à une première valeur pour indiquer que la version représentée par l'instance est la version courante de la configuration et définie à une deuxième valeur pour indiquer que la version représentée par l'instance n'est pas la version courante de la configuration ; ou
(ii) les informations de commande de version comprennent un identifiant qui identifient de manière unique une version de la configuration dans un groupe de configurations associé à la référence de configuration commune ; ou
(iii) les informations de commande de version comprennent un horodatage ; ou
(iv) les informations de commande de version comprennent un identifiant de type de service identifiant un service associé à l'instance ; ou
(v) les informations de commande de version comprennent un attribut de commande pour commander des opérations de gestion sur l'instance.

5. Procédé (300) selon l'une quelconque des revendications 1 à 4, dans lequel la référence de configuration commune comprend un indicateur de ressource uniforme ou un localisateur de ressources uniforme.

6. Procédé (400) mis en œuvre par une fonction de réseau (25, 35, 200) dans un réseau de communication, le procédé (400) comprenant :
la réception (410), depuis un stockage de données, d'une référence de configuration commune associée à un groupe de configurations incluant deux instances ou plus d'une configuration pour la fonction de réseau (25, 35, 200) stockée dans le stockage de données, les deux instances ou plus incluant une instance de base et une ou plusieurs instances mises à jour dérivées de l'instance de base, dans lequel chaque instance dans le groupe de configurations est associée à des données de commande de version qui identifient de manière unique une version de la configuration représentée par une telle instance ;
l'envoi (420), à un dispositif de commande d'interface (120) pour le stockage de données, d'un message de demande de téléchargement demandant une configuration courante pour la fonction de réseau (25, 35, 200), le message de demande de téléchargement incluant la référence de configuration commune ; et
la réception (430), depuis le dispositif de commande d'interface (120), d'une instance de la configuration représentant une configuration courante pour la fonction de réseau (25, 35, 200).

7. Procédé (400) selon la revendication 6, comprenant en outre :
l'envoi, au dispositif de commande d'interface (120), d'un ou plusieurs changements d'une configuration déployée de la fonction de réseau (25, 35, 200)à stocker dans le stockage de données en tant qu'une nouvelle instance représentant une version changée de la configuration pour la fonction de réseau (25, 35, 200) ; et
dans lequel la version changée est associée par le dispositif de commande d'interface (120) à des données de commande de version identifiant la version changée de la configuration en tant que la version courante ; et facultativement comprenant en outre :
à la suite d'un redémarrage de la fonction de réseau (25, 35, 200), l'envoi d'un deuxième message de demande de téléchargement demandant une configuration courante pour la fonction de réseau (25, 35, 200), le deuxième message de demande de téléchargement incluant la référence de configuration commune ; et
la réception, depuis le dispositif de commande d'interface (120), de la nouvelle instance de la configuration pour la fonction de réseau (25, 35, 200) en tant que la configuration courante.

8. Procédé (400) selon la revendication 6, comprenant en outre :
l'envoi d'un message de demande de statut au dispositif de commande d'interface (120), le message de demande de statut incluant la référence de configuration commune ; et
la réception, depuis la fonction de réseau (25, 35, 200), d'une réponse de statut incluant une indication si la configuration couramment déployée pour la fonction de réseau (25, 35, 200) est ou non la configuration courante ; et facultativement dans lequel
(i) la demande de statut inclut un identifiant pour la version couramment déployée de la configuration et la réponse de statut inclut un attribut booléen défini à une première valeur pour indiquer que la version déployée est la version courante et défini à une deuxième valeur pour indiquer que la version déployée n'est pas la version courante ; ou
(ii) la réponse de statut inclut un identifiant de la version courante de la configuration dans le groupe de configurations associé à la référence de configuration commune.

9. Procédé (400) selon l'une quelconque des revendications 6 à 8, dans lequel la référence de configuration commune comprend un indicateur de ressource uniforme ou un localisateur de ressources uniforme.

10. Dispositif de commande d'interface (120) pour un stockage de données de commande de version dans un réseau de communication, le dispositif de commande d'interface (120) étant configuré pour :
se connecter à un stockage de données configuré pour stocker deux instances ou plus d'une configuration pour la fonction de réseau (25, 35, 200), les deux instances ou plus incluant une instance de base et une ou plusieurs instances mises à jour dérivées de l'instance de base ;
associer chacune des deux instances ou plus à une référence de configuration commune pour créer un groupe de configurations pour la fonction de réseau (25, 35, 200) ;
pour chaque instance dans le groupe de configurations, associer des données de commande de version à une telle instance qui identifient de manière unique une version de la configuration représentée par une telle instance ;
recevoir, depuis la fonction de réseau (25, 35, 200), un message de demande de téléchargement demandant la configuration courante pour la fonction de réseau (25, 35, 200), le message de demande de téléchargement incluant la référence de configuration commune ;
récupérer, depuis le stockage de données, une instance représentant la configuration courante pour la fonction de réseau (25, 35, 200) sélectionnée parmi le groupe de configurations sur la base des données de commande de version ; et
envoyer, à la fonction de réseau (25, 35, 200), l'instance représentant la configuration courante pour la fonction de réseau (25, 35, 200).

11. Dispositif de commande d'interface (120) selon la revendication 10, en outre configuré pour réaliser le procédé selon l'une quelconque des revendications 2 à 5.

12. Fonction de réseau (25, 35, 200, 500) dans un réseau de communication, la fonction de réseau (25, 35, 200) étant configurée pour :
recevoir, depuis un stockage de données, une référence de configuration commune associée à un groupe de configurations incluant deux instances ou plus d'une configuration pour la fonction de réseau (25, 35, 200) stockée dans le stockage de données, les deux instances ou plus incluant une instance de base et une ou plusieurs instances mises à jour dérivées de l'instance de base, dans laquelle chaque instance dans le groupe de configurations est associée à des données de commande de version qui identifient de manière unique une version de la configuration représentée par une telle instance ;
envoyer, à un dispositif de commande d'interface (120) pour le stockage de données, un message de demande de téléchargement demandant une configuration courante pour la fonction de réseau (25, 35, 200), le message de demande de téléchargement incluant la référence de configuration commune ; et
recevoir, depuis le dispositif de commande d'interface (120), une instance de la configuration représentant une configuration courante pour la fonction de réseau (25, 35, 200).

13. Fonction de réseau (25, 35, 200, 500) selon la revendication 12, en outre configurée pour réaliser le procédé selon l'une quelconque des revendications 7 à 9.

14. Programme informatique comprenant des instructions exécutables qui,
i) lorsqu'elles sont exécutées par un circuit de traitement dans un dispositif de commande d'interface (120) pour un stockage de données de commande de version, amènent le dispositif de commande d'interface (120) à réaliser l'un quelconque des procédés selon les revendications 1 à 5 ; ou
ii) lorsqu'elles sont exécutées par un circuit de traitement dans une fonction de réseau (25, 35, 200), amènent la fonction de réseau (25, 35, 200) à réaliser l'un quelconque des procédés selon les revendications 6 à 9.

15. Support contenant un programme informatique selon la revendication 14, dans lequel le support est l'un parmi un signal électronique, un signal optique, un signal radio et un support de stockage lisible par ordinateur.
